(19) Europäisches Patentamt

European Patent Office

Office européen des brevets

(11) Veröffentlichungsnummer: **0 295 406 B1**

(12) **EUROPÄISCHE PATENTSCHRIFT**

(45) Veröffentlichungstag der Patentschrift: **29.07.92**

(21) Anmeldenummer: **88107049.4**

(22) Anmeldetag: **03.05.88**

(51) Int. Cl.⁵: **G05B 19/417**

(54) **Kommunikationssystem.**

(30) Priorität: **20.05.87 CH 1933/87**

(43) Veröffentlichungstag der Anmeldung:
**21.12.88 Patentblatt 88/51**

(45) Bekanntmachung des Hinweises auf die
Patenterteilung:
**29.07.92 Patentblatt 92/31**

(84) Benannte Vertragsstaaten:
**CH DE FR GB IT LI**

(56) Entgegenhaltungen:
**EP-A- 0 026 112       EP-A- 0 141 070**
**EP-A- 0 156 153       DE-A- 1 966 794**
**DE-A- 3 135 333       US-A- 4 137 699**

**TECHNISCHE RUNDSCHAU, Band 77, Nr. 37,**
**September 1985, Seiten 180-183, Bern, CH;**
**M. WECK et al.: "Der Einsatz von Sensoren in**
**automatisierten Fertigungssystemen"**

(73) Patentinhaber: **MASCHINENFABRIK RIETER AG**
**Postfach 290**
**CH-8406 Winterthur(CH)**

(72) Erfinder: **Erni, Markus**
**Langgasse 112**
**CH-8400 Winterthur(CH)**
Erfinder: **Meyer, Urs**
**Hohfurristrasse 1**
**CH-8172 Niederglatt(CH)**

**Beschreibung**

Diese Erfindung befasst sich mit der Automation einer Maschine oder einer Anlage, welche eine Vielzahl materialverarbeitende Stationen und mindestens ein Bedienungsgerät sowie steuerbare Mittel zur Erzeugung von relativer Bewegung zwischen dem Gerät und den Stationen umfasst. Normalerweise ist das Bediengerät fahrbar, und die Stationen bleiben an vorbestimmten Standorten stehen. Die umgekehrte Anordnung (z.B. auf einem Fördermittel montierte Stationen, welche an einem stationär angeordneten Bediengerät vorbeibewegt werden) ist aber bekannt und fällt ebenfalls innerhalb des Anwendungsbereiches für diese Erfindung.

Die Erfindung ist besonders für diejenigen Anordnungen geeignet, worin die Stationen dicht nebeneinander angeordnet sind, z.B. in mindestens einer Reihe. Die als Beispiele nachfolgend aufgeführten Ausführungen behandeln ausschliesslich die Automation von Textilmaschinen, wie z.B. Spinn-, Spul-, Zwirn-, Falschdrall-Texturier- und ähnliche Maschinen (und aus solchen Maschinen bestehende Anlagen), aber die Erfindung ist keineswegs auf diesen bestimmten Anwendungsbereich eingeschränkt.

Stand der Technik

Spätestens seit dem Ende der 50er bzw. dem Anfang der 60er Jahre sind Grossrechner zur Datenverarbeitung und Prozesssteuerung in der Industrie eingesetzt worden (siehe z.B. US-PS 3045210 und 3582621). Zur gleichen Zeit wurden Anstrengungen unternommen, um die Bewegungen eines fahrbaren Bediengerätes für eine Textilmaschine bzw. eine Textilmaschinen-Anlage von einem Steuerzentrum aus zu steuern (siehe z.B. US-PS 3070320, 3067962 und 3300959), ohne aber sich der aufwendigen damaligen Computer-Technologie zu bedienen.

Bis zum Ende der 60er Jahre bzw. dem Anfang der 70er Jahre sind dann verschiedene Vorschläge zur Anwendung von EDV- und Prozesssteuerungs-Technologie im Zusammenhang mit Werkzeug- und Textilmaschinen gemacht worden (siehe z.B. US-PS 3638191, 3430426, 3648026, 3648027 und 3798624). Solche Vorschläge schlossen auch die Steuerung eines Bedienungswagens ein (siehe z.B. US-PS 3824558, 3680297, 3680298 und 3680299, wobei die letzten Vorschläge durch die später veröffentlichte US-PS 4425754 etwas relativiert worden sind). Diese Vorschläge gingen bis zur zentralisierten Steuerung einer ganzen Spinnerei - US-PS 3922642.

Trotz dieser Möglichkeiten für die zentrale Steuerung waren aber die praktischen fahrbaren Bediengeräte so konstruiert, dass sie auf relativ einfache Signalgeber (Signallampen) in den einzelnen Stationen reagierten (siehe z.B. GB-PS 1103267 und US-PS 3810352). Es ist vorgeschlagen worden, dass ein Computer die Bewegungen eines Bediengerätes in der Gesamtanlage steuern sollte, während die Arbeit an den einzelnen Maschinen konventionell gesteuert werden musste (DOS 2460375). Zur ungefähr gleichen Zeit (US 3950926 und US 4043106) ist eine berührungslose Uebertragung von Informationen von einzelnen Spinnstellen an einen fahrbaren Automaten vorgeschlagen worden.

Vorschläge zur Ausrüstung des fahrbaren Gerätes selber mit datenverarbeitenden Mitteln sind in der Patentliteratur ab Anfang der 70er Jahre zu finden (siehe z.B. US-PS 3789595, 3908347 und 4005392 sowie JP 50-20042). Gegen Ende der 70er Jahre sind dann Vorschläge zu finden, wonach Daten an den einzelnen Stationen für spätere Uebertragung an das Gerät zu sammeln sind (siehe z.B. US-PS 4136511 und 4137699). Ab Anfang der 80er Jahre treten Mikroprozessoren zur Organisation des Datenflusses innerhalb der Maschinen in Einsatz (siehe z.B. US-PS 4294065 und DE-PS 3005746).

Es sind auch von Zeit zu Zeit verschiedene Vorschläge zur Ausnutzung der vorhandenen Daten für die Optimierung verschiedener Abläufe gemacht worden, wovon zwei der neueren Varianten in EP-PS 47723 und 90911 zu finden sind.

Für den Erfolg der verschiedenen Vorschläge sind die Kommunikations-Verbindungen zwischen den verschiedenen Elementen des Systems von entscheidender Bedeutung. Trotzdem hat dieser Aspekt relativ wenig Beachtung in der Patentliteratur gefunden. Die berührungslose Uebertragung von Informationen ist verschiedentlich erwähnt worden (siehe insbesondere US-PS 4137699 - Uebertragung von einer Spinnstelle zum fahrbaren Automaten sowie DE-OS 3135333 - Uebertragung von einem Steuerungszentrum zum Automaten), aber im allgemeinen wird diese Uebertragung durch Leiter bewerkstelligt - siehe DE-OS 3303733, 3332899 und 3510521 sowie US-PS 4340187 und US-PS 4475331, wo die Leiterverbindung als Vorteil gegenüber der berührungslosen Verbindung angesehen wird.

Insbesondere ist es aus dem den Oberbegriff der Patentansprüche 1 und 10 bildenden US-A-4 137 699 bekannt, Daten über die Garnqualität an den einzelnen Spinnstellen in einen Zwischenspeicher zu speichern, welche von Zeit zu Zeit durch einen Prozesscomputer auf dem Bedienungswagen abgefragt werden.

Ein zweiter Aspekt, welcher noch wenig Beachtung gefunden hat, ist die Integration aller informationstragender Elemente in einem Gesamtsystem. Die Integrationsmöglichkeiten setzen aber die praktischen Grenzen für die Optimierung des Systems.

Es ist die Aufgabe dieser Erfindung, die heute zur Verfügung stehenden Möglichkeiten besser auszunützen, um die Stationen (Stellen) und das Bediengerät in einem organisierten Informations-System zusammenzubinden.

Zu diesem Zweck erfordert die Erfindung eine Maschine oder eine Anlage mit einer Vielzahl von materialverarbeitenden Stationen, wovon jede mit einer mindestens teilweise autonom funktionierenden Steuerung (z.B. einem Mikroprozessor) ausgerüstet ist. Solche Anordnungen sind heute Stand der Technik.

Es sind auch mindestens ein Bediengerät zur Ausführung von vorbestimmten Bedienungsoperationen an einzelnen Stationen sowie Mittel zur Erzeugung von steuerbarer Relativbewegung zwischen dem Bediengerät und den Stationen vorhanden.

Die einzelnen autonomen Steuerungen sind miteinander durch geeignete Mittel zur Informations-Uebertragung (Datenübertragung) verbunden. Dies ist auch heute Stand der Technik, wobei die Verbindung normalerweise über ein Steuerungszentrum (Zentralrechner - nachfolgend kurz "Zentrum" genannt) bewerkstelligt wird. Ein solches Zentrum kann direkt in einer Maschine oder gemeinsam für eine Mehrzahl von Maschinen vorgesehen werden.

Die Erfindung sieht auch steuerbare Mittel zum unmittelbaren (vorzugsweise berührungslosen) Austausch von Informationen (Daten) zwischen dem Gerät und jeder der genannten autonom funktionierenden Stationssteuerungen vor, wenn das Gerät und die Station in einer vorbestimmten Relation zueinander stehen.

Es kann z.B. für jede der genannten Steuerungen eine jeweilige Datenübertragunszone definiert werden, sodass der Austausch von Informationen zwischen dem Gerät und einer bestimmten Steuerung durchgeführt werden kann, wenn sich das Gerät in der entsprechenden Zone befindet.

Der Austausch von Informationen zwischen dem Gerät und den Stationen wird vorzugsweise durch berührungslose optische Mittel, z.B. sogenannte Lichtschranken, durchgeführt, wobei das Gerät mit einer Sender / Empfänger-Einheit und jede Station mit einer eigenen Sender / Empfänger-Einheit ausgerüstet ist.

Die Anordnung kann so getroffen werden, dass jedesmal, wenn das Gerät in die Datenübertragunszone einer Station eintritt, es sich bei dieser Station meldet und die Station nach ihrem momentanen Zustand abfragt. Es findet also sogar dann ein Informationsaustausch statt, wenn das Gerät an der Station vorbeifährt, ohne zu stoppen.

Die Stationssteuerung ihrerseits kann so organisiert werden, dass sie Daten bezüglich dem Kontakt mit dem Gerät in das alle anderen Steuerungen beinhaltende Gesamtsystem einspeist.

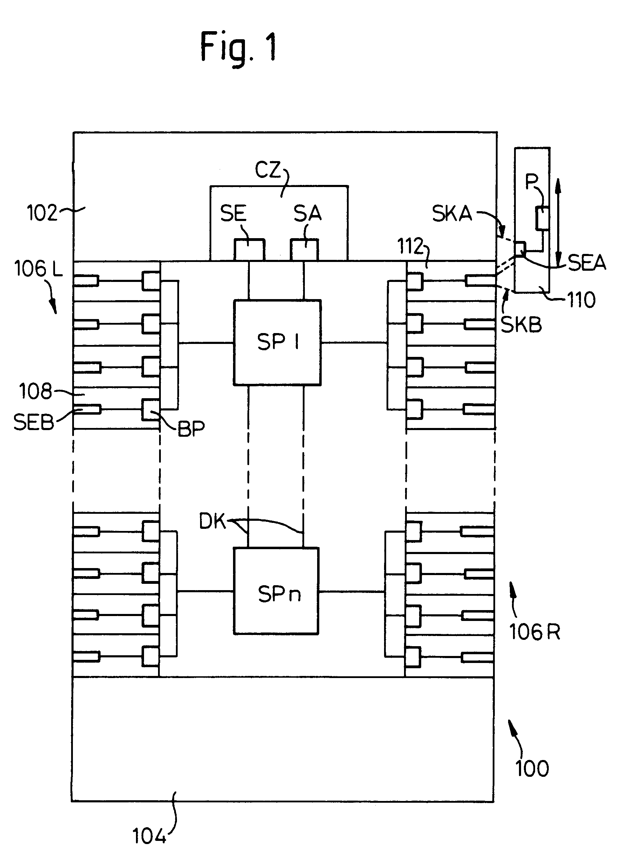

Das mit dieser Erfindung neu vorgeschlagene Prinzip ist in Fig. 1 in seiner Anwendung auf einer heute handelsüblichen Art von Rotor-Spinnmaschine schematisch gezeigt. Eine solche Maschine enthält ein Datenverarbeitungs-System, welches in seinen Grundzügen in der europäischen Patentschrift No. 156153 schon beschrieben worden ist. Es werden hier nur die Hauptaspekte des Systems zusammengefasst.

Die Maschine 100 besteht aus zwei Endköpfen 102, 104 und auf der einen Längsseite der Maschine einer ersten Spinnstellenreihe 106L und auf der anderen Längsseite der Maschine einer zweiten Spinnstellenreihe 106R. Die Endköpfe enthalten Antriebsmotoren, Getriebe, Ventilator, Steuerungs- und Anzeigeelemente usw., welche den Spinnstellen gemeinsam dienen. Im Endkopf 102 befindet sich ein Steuerungszentrum CZ, welches indirekt (wie nachfolgend beschrieben) mit den einzelnen Spinnstellen verbunden ist und diese gemäss einem vorgegebenen Programm steuern kann.

Für die Signalübertragung zwischen dem Zentrum CZ und den Spinnstellen werden Letztere in sogenannten "Sektionen" organisiert, wobei jede Sektion einer "Unterzentrale" (einem sogenannten Sektionsprint) zugeordnet wird. In Fig. 1 sind der dem Endkopf 102 nächstliegende Sektionsprint SP1 und der dem Endkopf 102 entfernteste Sektionsprint SPn angedeutet, wobei (n - 2) nicht dargestellte Sektionen dazwischenliegen. Jeder Sektionsprint SP betreut eine bestimmte Anzahl Spinnstellen, wovon die Hälfte sich in der Reihe 106L und die andere Hälfte sich in der Reihe 106R befindet. Normalerweise enthält eine Sektion ca. 20 Spinnstellen, und die Anzahl (n) Sektionen liegt im Bereich 10 bis 12. In Fig. 1 werden übersichtshalber nur 8 Spinnstellen pro Sektion schematisch angedeutet.

Die Sektionsprints SP1 bis SPn sind mit einem Signalausgang SA und einem Signaleingang SE im Steuerungszentrum CZ durch Datenkanäle DK verbunden. Daten (Zustandsmeldungen, Befehle usw.) werden zwischen dem Zentrum CZ und den Sektionsprints SP gemäss einem vom Zentrum bestimmten Abfragetakt ausgetauscht.

Jede Spinnstelle (es wird hier die Spinnstelle 108 in der Reihe 106L und der ersten Sektion nur als Beispiel genommen) umfasst eine eigene, autonom funktionierende Steuerung ("Boxprint" genannt) BP. Dieser Boxprint ist mit allen wichtigen Funktionselementen (nicht gezeigt) in der eigenen Spinnstelle zum

EP 0 295 406 B1

Austausch von Signalen gekoppelt und ist somit ständig über die Zustände der verschiedenen Elemente informiert und zum Eingriff in den Ablauf innerhalb dieser Spinnstelle bereit. Der Boxprint BP umfasst auch Speichermittel, sodass Daten über die momentanen Zustände der Funktionselemente zur Verfügung stehen. Der Boxprint wird heutzutage normalerweise in der Form eines Mikroprozessors ausgeführt.

Jeder Sektionsprint SP ist mit den Boxprints BP seiner jeweiligen Spinnstellen für signalaustausch verbunden. Die Sektionsprints funktionieren als Vermittler zwischen den Boxprints und dem Zentrum CZ, wobei sie in einem vorgegebenen Takt Daten von ihren jeweiligen Boxprints holen und an das Zentrum weiterleiten und Daten vom Zentrum empfangen und an die zugehörigen Boxprints senden. Die Sektionsprints können aber auch von sich aus Befehle an ihre jeweiligen Boxprints erteilen. Z.B. können gewisse Auswertungsfunktionen in den Sektionsprints eingebaut werden, wobei dann gemäss einem Auswertungsprogramm der Sektionsprint einen Befehl an einen Boxprint und eine entsprechende Meldung an das Zentrum geben kann. Die Boxprints funktionieren aber autonom (jeder für sich gemäss seiner eigenen Programmierung), bis ihnen ein Befehl von einer hierarchisch übergeordneten Stelle erteilt wird.

Eine moderne Maschine wird auch mit einem fahrbaren Bediengerät (Automat) 110 ausgerüstet. Der Automat fährt auf einer geeigneten Führung (nicht gezeigt) mindestens einer Längsseite der Maschine entlang. Falls die Maschine mit nur einem Automaten 110 versehen ist, muss das Gerät auch um mindestens einen Endkopf und der anderen Seite entlang fahren können. Solche Automaten sind nun Stand der Technik in der Textilmaschinenindustrie und werden hier deswegen nicht näher beschrieben. Beispiele sind in den europäischen Patentanmeldungen No. 126352, 126373, 127017 und 190421 beschrieben worden. Der Hauptpunkt im Zusammenhang mit dieser Erfindung ist, dass jeder Automat 110 mit seiner eigenen, autonom funktionierenden Steuerung (einem eigenen Mikroprozessor) P versehen ist, welche die Abläufe auf dem jeweiligen Automaten gemäss einer vorbestimmten Programmierung steuert.

Soweit unterscheidet sich die beschriebene Maschine in keinerlei Weise von den schon gebräuchlichen Maschinen.

Im Unterschied zu Letzteren ist aber die in Fig. 1 dargestellte Maschine mit zusätzlichen Datenübertragungs-Möglichkeiten versehen. Zu diesem Zweck ist jede Spinnstelle mit einer eigenen Sender / Empfänger-Einheit SEB (nur für die Spinnstelle 108 angedeutet) und der Automat 110 mit einer entsprechenden Sender / Empfänger-Einheit SEA versehen. Jede Einheit SEB ist direkt mit ihrem jeweiligen Boxprint BP zur Signalübertragung in beiden Richtungen gekoppelt, und Einheit SEA ist entsprechend mit der Automatensteuerung P verbunden.

Jede Sender / Empfänger-Einheit SEB ist für den berührungslosen Austausch von Signalen in beiden Richtungen mit der Einheit SEA geeignet. Jede Sender / Empfänger-Einheit (SEB und SEA) ist aber so konstruiert, dass sie einen jeweiligen "Arbeitsbereich" (Signalkegel) definiert, wobei sich die verschiedenen Signalkegel in ihren Längsrichtungen jeweils senkrecht zur Maschinenlänge erstrekken. Der Signalkegel der Einheit SEA ist in Fig. 1 mit den gestrichelten Linien SKA angedeutet, während der Signalkegel der nebenstehenden Spinnstelle 112 mit den gestrichelten Linien SKB angedeutet ist. Ein Informationsaustausch (Daten- oder Signalaustausch) zwischen dem Automaten 110 und einer bestimmten Spinnstelle kann erst dann stattfinden, wenn eine Ueberlappung zwischen dem Signalkegel SKA des Automaten und dem jeweiligen Signalkegel SKB dieser Spinnstelle zustande kommt. Die Sender / Empfänger-Einheiten SEB sind derart in den Spinnstellen und die Sender / Empfänger-Einheit SEA ist derart im Automat angeordnet, dass eine Ueberlappung des Kegels SKA mit dem Kegel einer Spinnstelle stattfindet, wenn der Automat 110 an dieser spinnstelle vorbeifährt.

Weitere Einzelheiten eines praktischen Systems werden nachfolgend beschrieben werden, aber vorerst werden gewisse Auswirkungen des anhand von Fig. 1 dargestellten Prinzips aufgeführt werden:

1) Das System kann so ausgelegt werden, dass eine Spinnstelle nur dann Signale über ihre Sender / Empfänger-Einheit SEB aussendet, wenn sie dazu vom Automaten 110 aufgefordert wird (passive Spinnstellen - aktiver Automat)

2) Daten von der Automatensteuerung P können nach der Uebertragung an eine beliebige Spinnstelle über den Boxprint dieser Spinnstelle und den zugeordneten Sektionsprint an das Zentrum CZ weitergeleitet werden

3) (umgekehrt) Befehle vom Zentrum CZ können über eine beliebige Spinnstelle an die Automatensteuerung P vermittelt werden

4) Das System kann so ausgelegt werden, dass der Automat 110 im Vorbeigehen an jeder Spinnstelle sich an dieser Spinnstelle meldet (sogar dann, wenn er nicht zur Ausführung von Bedienungsarbeit an dieser Spinnstelle aufgefordert wird), und die Boxprints können solche Meldungen über die Sektionsprints an das Zentrum weiterleiten. Letzteres ist dann in der Lage, die Bewegungen des Automaten 110 auch mindestens zu überwachen und gegebenenfalls zu optimieren.

5) Die Boxprints können aber auch so ausgelegt werden, dass sie vorbestimmte, vom Automaten 110

<div align="center">4</div>

erteilbare Befehle ausführen, ohne eine Bestätigung vom Sektionsprint bzw. vom Zentrum zu verlangen.

Von dieser Kurzauflistung der Auswirkungen wird es schon klar sein, dass mit einer relativ einfachen Modifikation bestehender Maschinenkonstruktionen (Einbau der Sender / Empfänger-Einheiten SEA bzw. SEB und Verbindung dieser Einheiten mit den ihnen zugeordneten Steuerungen P bzw. BP) eine beträchtlich höhere Integration des Automaten 110 im Gesamtinformationssystem möglich ist.

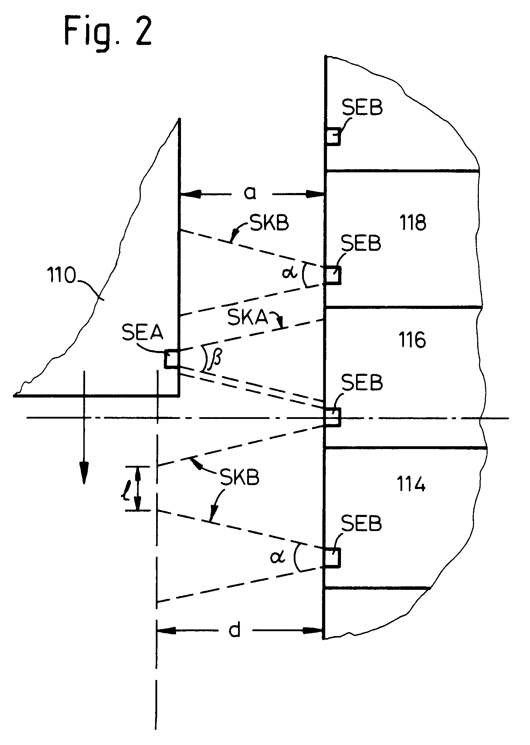

Anhand von Fig. 2 werden nun gewisse Anforderungen für die praktische Ausführung mit der heute zur Verfügung stehenden Technologie in Betracht gezogen. Diese Figur zeigt drei nebeneinander angeordnete Spinnstellen 114, 116, 118 zusammen mit dem vordereren Teil (d.h. dem in der Fahrtrichtung führenden Teil) des Automaten 110, welcher sich in der durch den Pfeil angedeuteten Fahrtrichtung an den Spinnstellen vorbeibewegt.

Wie schon im Zusammenhang mit Fig. 1 beschrieben, hat jede Spinnstelle eine Sender / Empfänger-Einheit SEB mit einem entsprechenden Signalkegel SKB. Diese Einheiten sind aber "passiv", d.h. sie senden nicht auf eigene Initiative, sondern nur dann, wenn sie durch ein Abfragesignal von der Sender/Empfänger-Einheit SEA des Automaten dazu aufgefordert werden.

Jeder Signalkegel SKB hat eine effektive maximale Ausdehnung in der Querrichtung, d.h. senkrecht zur Längsseite der Maschine und zur Fahrtrichtung des Automaten 110. Diese effektive maximale Ausdehnung ist von der Empfindlichkeit der Empfänger, der Intensität der Sender und dem Strahlwinkel $\alpha$ abhängig. Sie ist für den Kegel SKB der Spinnstelle 114 mit d bezeichnet. Die Ausdehnung d muss etwas grösser sein, als der maximale Abstand a zwischen der Einheit SEA und einer Einheit SEB, wenn diese Einheiten sich direkt gegenüberstehen, d.h., wenn die Einheit SEA die Achse eines Signalkegels SKB schneidet. Der Abstand a ist durch die Führung für den Automaten 110 innerhalb vorgegebenen Toleranzen zu halten, und die Ausdehnung d sollte natürlich soweit als praktisch möglich für alle Einheiten SEB gleich sein. Wenn der Ausdruck "Signalkegel" in der nachfolgenden Beschreibung benützt wird, weist er auf den effektiven Signalkegel mit der axialen Länge d hin. Ein von einem Spinnstellen-Sender ausgesendetes Signal breitet sich über den jeweiligen effektiven Signalkegel hinaus aus, wird aber ausserhalb dieses Kegels bedeutungslos, da es zu schwach wird, um vom Automaten-Empfänger erkannt zu werden.

Jeder Signalkegel SKB sollte auch soweit als praktisch möglich den gleichen Winkel $\alpha$ aufweisen, und zwar derart, dass benachbarte Kegel durch einen minimalen Abstand $\ell$ in der Fahrtrichtung des Automaten 110 voneinander entfernt sind. Somit ist die Automatensteuerung P in der Lage, benachbarte Spinnstellen klar voneinander zu unterscheiden, vorausgesetzt, dass der Winkel $\beta$ des Signalkegels SKA von der Automaten-Sender / Empfänger-Einheit SEA keine gleichzeitige Ueberlappung mit benachbarten Signalkegeln SKB zulässt.

Ein Informationsaustausch zwischen dem Automaten 110 und einer Spinnstelle kann stattfinden, sobald eine Ueberlappung zwischen dem Signalkegel SKA und dem Signalkegel SKB der zutreffenden Spinnstelle zustande kommt und kann sich fortsetzen, solange eine solche Ueberlappung besteht. Die maximale Uebertragungszeit bei einem einzigen "Kontakt" zwischen dem Automaten und der Spinnstelle ist also von der Fahrgeschwindigkeit des Automaten 110 und der maximalen Grösse der Signalkegel SKB abhängig. Letztere sind durch die sogenannte Teilung der Spinnstellen, d.h. vom Abstand zwischen zwei benachbarten Sender / Empfänger-Einheiten SEB, nach oben begrenzt. Die Spinnstellen-Teilung ist durch die allgemeine Maschinenkonstruktion gegeben und kann normalerweise nicht im Hinblick auf das Informationssystem beeinflusst werden. Die Fahrtgeschwindigkeit des Automaten wird normalerweise so hoch wie praktisch möglich gewählt werden, um einen hohen Wirkungsgrad zu erzielen. Es werden dementsprechend sehr hohe Anforderungen an die Informationsübertragungsmittel gestellt, und es ist ratsam, die Menge der zu übertragenden Informationen beim ersten Kontakt (während der Anfahrphase) zu begrenzen.

Es sollten auf jeden Fall mindestens die folgenden Signale zwischen dem Automaten und einer Spinnstelle beim ersten Kontakt ausgetauscht werden:

1) Ein vom Automat ausgehendes Abfragesignal

2) Eine von der Spinnstelle gesendete Reaktion in der Form eines Statussignals und

3) Eine vom Automaten abgegebene Antwort.

Es können somit alle wesentlichen Grundinformationen ausgetauscht werden, aber diese Variante nützt die Möglichkeiten des Systems nicht optimal aus. Schon beim ersten Kontakt (während der Automat noch bei voller Geschwindigkeit fährt) ist es nützlich, eine "Botschaft" (z.B. einen vom Zentrum CZ erteilten Befehl) an die Automatensteuerung P weiterleiten zu können. Es ist also der Austausch von fünf Signalen beim ersten Kontakt vorgesehen, nämlich die drei oben erwähnten zusammen mit den folgenden, zusätzlichen Signalen:

4) Eine von der Spinnstelle abgegebene Botschaft an den Automaten und

5) Eine "Abmeldung" des Automaten von dieser Spinnstelle.

Damit können grundsätzlich zwei verschiedene Vorgehen definiert werden, nämlich ein Vorgehen für den Fall, dass der Automat weiterlaufen sollte und ein anderes für den Fall, dass die Spinnstelle bedienungsbedürftig ist. Die entsprechenden Signalabläufe können stichwortartig folgenderweise dargestellt werden:

| Signal | Ablauf 1 (Weiterlaufen) | | Ablauf 2 (Stop) | |
|---|---|---|---|---|
| | Automat | Spinnstelle | Automat | Spinnstelle |
| 1. | Abfrage ⟶ | | Abfrage ⟶ | |
| 2. | ⟵ | Status | ⟵ | Status "SOS" |
| 3. | Quittung ⟶ | | Antwort ⟶ | |
| 4. | ⟵ | Botschaft | ⟵ | Quittung |
| 5. | Abmeldung ⟶ | | Abmeldung ⟶ | |

wobei der Pfeil für jedes Signal die Uebertragungsrichtung angibt.

Das Statussignal Nr. 2 im ersten Ablauf kann zwei grundverschiedene Formen annehmen. Wenn die Spinnstelle normal spinnt, kann ein "OK" (in Ordnung) Signal abgegeben werden. Falls die Spinnstelle blockiert ist, weil durch eine vom Automaten ausgeführte Bedienung kein Erfolg zu erwarten ist, kann ein "Defekt"-Signal ausgegeben werden. Eine solche Blockierung kann z.B. vom Zentrum oder von der Sektion anhand von einer Qualitätsauswertung bewerkstelligt werden.

Das mit "SOS" bezeichnete Statussignal Nr. 2 im zweiten Ablauf bedeutet, dass die Spinnstelle eine Bedienungsoperation vom Automaten verlangt. Dieses Signal kann verschiedene Formen in Abhängigkeit von der verlangten Operation annehmen. Die entsprechende "Antwort" kann in der Form eines Befehles sein, welcher direkt an die Spinnstellen-Steuerung gerichtet ist und Vorbereitungsarbeiten in der Spinnstelle für die auszuführende Bedienungsoperation auslöst. Der Automat selber wird dann gebremst, positioniert sich gegenüber der zutreffenden Spinnstelle und führt die Bedienungsoperation aus.

Während der Bedienungsoperation können weitere Signale zwischen der Spinnstelle und dem Automaten ausgetauscht werden, sodass die Spinnstelle auf direkten Befehl des Automaten "Hilfsarbeit" während der Bedienungsoperation ausführen und/oder "Botschaften" vom Automaten an das Zentrum übermitteln kann. Somit kann der Automat das Zentrum über die von ihm "vorgefundenen" Zustände der Spinnstelle und/oder die von ihm ausgeführten Arbeiten informieren. Die Sender / Empfänger-Einheit SEA kann aber die Informationsübertragung beim Stillstand des Automaten nicht ausführen, da der Signalkegel SKA nach der Uebertragung des Signals Nr.5 der ersten Kontaktphase keine Ueberlappungen mehr mit dem Signalkegel SKB der zutreffenden Spinnstelle hat. Der Automat 110 muss also mit mindestens einer zusätzlichen Sender / Empfänger-Einheit (in Fig. 1 und 2 nicht gezeigt) ausgerüstet werden, und diese zweite Einheit sollte der Einheit SEB einer Spinnstelle direkt gegenüberstehen, wenn der Automat an dieser Spinnstelle zur Ausführung von Bedienungsoperationen positioniert worden ist.

Wie nachfolgend näher beschrieben wird, ist es aber auch vorgesehen, dass der Automat unter Umständen einen Hilferuf von einer Spinnstelle ablehnen kann, z.B., falls er schon einen Befehl vom Zentrum zur Ausführung von Arbeit mit einer höheren Priorität erhalten hat. Das Antwortsignal (Nr. 3) im zweiten Ablauf löst dann keine Arbeiten in der Spinnstelle aus, wird aber von der Spinnstelle trotzdem quittiert.

Der Kontakt zwischen dem Automaten und der Spinnstelle wird auf jeden Fall (Ablauf 1 oder Ablauf 2) in einem Speicher im Boxprint BP (Fig. 1) der zutreffenden Spinnstelle registriert und an das Zentrum CZ über den Sektionsprint SP im Lauf des vom Zentrum bestimmten Abfragezykluses gemeldet. Das Zentrum erhält somit laufend Meldungen über die Bewegungen und allfällige Bedienungsaktivitäten des Automaten.

In der Beschreibung der in den Fig. 1 und 2 dargestellten Ausführungen ist Wert auf die berührungslose Uebertragung von Informationen zwischen dem Automaten und den Spinnstellen gelegt. Somit können die mechanischen Probleme der Uebertragung über ein Schleppkabel oder über einen Schleifkontakt mit einer Fahrschiene vermieden werden. Die Probleme des Ansprechens der richtigen Spinnstelle können somit auch relativ leicht bewältigt werden. Während seines normalen Patrouillierens (Fahrt mit voller Geschwindigkeit) sendet der Automat Abfragesignale gemäss einem vorbestimmten Takt, sodass ein solches Signal ausgesendet wird, jeweils nachdem eine Ueberlappung zwischen dem Signalkegel SKA und dem Signalkegel SKB einer Spinnstelle erzeugt worden ist. Diese Spinnstelle ist dann automatisch durch das von ihr empfangene Abfragesignal angesprochen und zur Informationsübertragung aktiviert.

Die Erfindung schliesst aber direkte Verbindungen zwischen dem Automaten und den Spinnstellen über eine Leitung nicht aus. Ein Mittel zur Herstellung solcher Verbindungen ist durch die US-PS 4475331 schon bekannt, wonach die Spinnstellen der Reihe nach einzeln an einer Sammelleitung durch mechanische Betätigung von Schaltern während der Fahrt des Automaten anzukoppeln sind. Dieses System könnte zur Anwendung gemäss dieser Erfindung angepasst werden, wobei aber die Sammelleitung zur Uebertragung von Daten an in den Spinnstellen eingebauten Speichern anzupassen wäre. Ferner wäre es ratsam, einen Spinnstellen-Speicher mit der Sammelleitung nicht durch mechanische, sondern durch berührungslose Betätigung eines Schalters zu bewerkstelligen.

Eine berührungslose Uebertragung von Informationen zwischen dem Automat und den Spinnstellen wird aber bevorzugt und kann durch optische Sender / Empfänger-Einheiten durchgeführt werden. Es sind schon solche Geräte bekannt, welche Baud-Raten zu bis 9'600 Baud ermöglichen. Diese Rate genügt vollauf für den vorher beschriebenen Signalablauf bei einer Fahrtgeschwindigkeit des Automaten von ca. 30 m/Min., einem Abstand a (Fig. 2) bis zu 200mm und einer Spinnstellenteilung von 215mm. Dies erlaubt eine Uebertragungsdauer zwischen 10 und 40 Millisekunden bei einem maximalen zurückgelegten Weg des Automaten während der Uebertragung von 25 bis 30mm.

Um einige durch diese Erfindung eröffnete Möglichkeiten aufzuzeigen, werden nachfolgend verschiedene Signaltypen für den Austausch zwischen dem Automaten und der Spinnstelle erwähnt und kurz erläutert. Diese Signale werden vorzugsweise durch serielle Uebertragung von Impulsen (Bits) gebildet, sodass die vorgesehene berührungslose Verbindung zwischen dem Automaten und einer Spinnstelle als eine sogenannte serielle Schnittstelle arbeitet.

Gewisse Signale werden ausschliesslich zwischen dem Automaten und den Spinnstellen ausgetauscht, d.h. sie werden von den Spinnstellen nicht an andere Maschinenelemente weitergeleitet. Ausser den Quittiersignalen enthält diese Signalgruppe hauptsächlich die Befehle, welche direkt vom Automaten an eine Spinnstelle gehen. Die Möglichkeiten hier hängen von der allgemeinen Maschinenkonstruktion ab, insbesondere von den mechanischen Funktionen, welche durch einen Boxprint steuerbar sind- Solche Funktionen sind z.B. die Speisung des Fasermaterials an die Spinnelemente, Reinigung der Spinnelemente, Bewegung von Fadenwächtern, Bewegung von Spulenbügeln u.a.

Eine zweite Signalgruppe umfasst diejenigen Signale, welche Spinnstellenzustände darstellen. Diese Signale sind also durch den jeweiligen Boxprint erzeugt, wobei sie auch über den zuständigen Sektionsprint an das Zentrum gemeldet werden. Diese Signale zeigen als Wichtigstes einen Fadenbruch an, wobei dieser Fadenbruch "zufällig" zustande kommen oder gesteuert, z.B. durch eine Garnqualitäts-Ueberwachung herbeigeführt sein kann.

Eine weitere Signalgruppe umfasst diejenigen Signale, welche ursprünglich aus dem zentralen Rechner stammen.

Diese Gruppe umfasst z.B. ein Doff-Signal (wo die Spulenlängen durch eine zentrale Längenmessung überwacht werden) und ein präventives Wartungssignal, wo die ununterbrochene Laufdauer einer Spinnstelle vom zentralen Rechner überwacht wird, sodass eine vorbestimmte Bedienungsoperation (z.B. Reinigung) vom zentralen Rechner nach einer vorbestimmten Periode befohlen werden kann. Im letzten Fall kann das System so ausgelegt werden, dass vom zentralen Rechner ein gewisser Intervall (Laufdauer) definiert wird, innerhalb welchem die präventive Wartungsoperation stattfinden muss. Der Wartungsbefehl wird vom zentralen Rechner am Anfang dieses Intervalls an den zutreffenden Boxprint abgegeben und danach bei der nächsten Gelegenheit an den Automaten weitergeleitet. Während des genannten Intervalls läuft aber die Spinnstelle normal weiter, sofern kein zufälliger Fadenbruch passiert.

Der präventiven Wartung ist aber eine relativ niedrige Priorität eingeräumt, sodass dieser Hilferuf vom Automaten abgelehnt werden kann, falls er einen Befehl zur Ausführung von Arbeit von höherer Priorität schon erhalten hat. Wenn die präventive Wartung nicht bis zum Ablauf des bestimmten Intervalls durchgeführt worden ist, kann der zentrale Rechner dem Boxprint einen Befehl erteilen, einen Fadenbruch zu verursachen, wobei dann der Bedienung dieser Spinnstelle eine höhere Priorität eingeräumt wird.

Als weiteres Signal dieses Typs ist ein sogenannter "Qualitätsschnitt" zu bewerten, wo vom zentralen Rechner (oder Sektionsprint) aus ein Fadenbruch erzeugt wird, weil die Oualitätsüberwachung festgestellt hat, dass die zutreffende Spinnstelle minderwertiges Garn produziert.

Dem Automaten kann somit befohlen werden, eine vorbestimmte Länge Garn von der Spule abzuspulen und zu entfernen, bevor diese Spinnstelle wieder in Gang gesetzt wird. Ein solches Vorgehen ist z.B. in US-PS 4137699 vorgeschlagen worden.

Als wichtiges Signal dieses Typs ist ein vom zentralen Rechner an den Automaten gerichteter Befehl zu werten. Dem Automaten kann z.B. befohlen werden, an einer bestimmten oder an irgendeiner Spinnstelle anzuhalten, entweder zum Austausch von Informationen zwischen dem Automaten und dem zentralen Rechner (über den zutreffenden Boxprint und Sektionsprint) oder bloss, weil der zentrale Rechner festgestellt hat, dass vom Automaten im Moment keine Bedienung verlangt wird. Wenn weitere Arbeit auszuführen ist, kann der Automat dann wieder vom zentralen Rechner aus in der richtigen Richtung in Gang gesetzt werden.

Eine letze Signalgruppe umfasst diejenigen Signale, welche vom Automaten stammen und an den zentralen Rechner weiterzuleiten sind. Diese Gruppe umfasst z.B. Zustandsmeldungen bezüglich der Spinnstelle, wie "kein Vorlagematerial gefunden", "keinen Faden gefunden" oder bezüglich Zustandsänderungen, welche vom Automaten gemäss seiner Programmierung durchgeführt werden, z.B. wo eine zu bedienende Spinnstelle vom Automaten als defekt eingestuft wird.

Um die vorteilhaften Auswirkungen des neuen Systems noch deutlicher hervorzubringen, werden gewisse Signale als Beispiele nachfolgend einzeln behandelt:

Reset-Signale: Jedesmal, wenn der Automat eine neue Hülse in eine bestimmte Spinnstelle einlegt, kann er ein "Reset-Signal" über diese Spinnstelle an den zentralen Rechner senden, sodass die Spulenlängenmessung für diese Spinnstelle auf Null gesetzt wird.

Bedienungserfolge: Von der Spinnstelle oder vom Automaten oder von beiden kann der zentrale Rechner über den Erfolg bzw. Misserfolg vorbestimmter Bedienungsoperationen informiert werden, z.B. "Angesetzt beim x-ten mal", "Schnitt wegen schlechtem Ansetzer" usw. Somit ist der zentrale Rechner in der Lage, nicht nur die Spinnstellen, sondern auch dazu den Wirkungsgrad des Automaten zu überwachen. Falls die gleichen Misserfolge regelmässig an unterschiedlichen Spinnstellen vorkommen, kann ein Fehler des Automaten vermutet werden.

Qualitätsschnitt: Wo das Spinnen an einer bestimmten Spinnstelle durch die Qualitätsauswertung unterbrochen wird, kann der entsprechenden Spinnstelle befohlen werdend den Garnfehlertyp (durch eine entsprechende Signalform) dem Automaten mitzuteilen. Der Automat kann darauf reagieren, indem er eine vom Fehlertyp abhängige Garnlänge von der Spule abspult und entfernt. Die Längenmessung für diese Spule kann entsprechend korrigiert werden.

Präventivwartung: Nie schon beschrieben, kann nun normalerweise eine Spinnstelle weiterlaufen, bis der Automat der Spinnstelle anzeigt, dass er dazu bereit ist, die Wartung durchzuführen. Die Spinnstelle kann dann automatisch selber einen Fadenbruch auslösen, und die sogenannte "Faserbartvorbereitung" (siehe US-PS No. 4022011) kann danach entfallen, da die Lunte schon bereit ist zum sofortigen Ansetzen.

Spinnstellenidentifikation: Einem Boxprint kann vom zentralen Rechner befohlen werden, statt eines normalen Statussignales ein Identifizierungssignal (ID-Signal oder Peil-Signal) als Antwort auf eine vom Automaten gesendete Abfrage zurückzugeben. Der Automat kann somit vom zentralen Rechner nach dieser Spinnstelle gesandt werden, indem dieser dem Automaten bloss die zutreffende Richtung anzeigt und ihm den Befehl erteilt, das Peilsignal auszusuchen. Das Peisignal kann für jede Spinnstelle unterschiedlich sein, z.B. kann jeder Spinnstelle eine eigene Identifikationsnummer erteilt werden, welche sie als Peilsignal aussendet.

Der letzte erwähnte Signaltyp zeigt klar einen weiteren Vorteil des neuen Systems. Der Automat kann an eine vorbestimmten Stelle auf seiner Fahrbahn gelenkt werden, ohne selber einen "Geleiseplan" der Fahrbahn haben zu müssen. Die Stelle selber kann in einen solchen Zustand gestellt werden, dass der Automat sie als die "richtige Stelle" erkennt. Ebenfalls kann der Automat den zentralen Rechner über die in einer bestimmten Spinnstelle vorgefundenen Zustände informieren, ohne selber die Spinnstelle identifizieren zu müssen. Da die zutreffenden Informationen über die Spinnstelle vermittelt werden, wird der zentrale Rechner ohne weiteres erkennen, welche Spinnstelle gemeint ist.

Eine Ausnahme bildet natürlich eine Spinnstelle mit einem solchen Defekt, dass keine Informationen mehr über sie vermittelt werden können. Der Automat kann aber so programmiert werden, dass er dann an einer Nachbarstelle positioniert und Informationen bezüglich der defekten Stelle über die Nachbarstelle an den zentralen Rechner leitet.

Die Integration des Peilsignals im Informationsübertragungs-System ist vorteilhaft, aber nicht erfindungswesentlich. Es könnte z.B. ein anderes ("Orientierungs-") System vorgesehen werden, welches der "Markierung" bestimmter Spinnstellen dient, beispielsweise durch das Aufleuchten konventioneller Signallampen, welche vom Automaten erkannt werden können. Die Integration mit der Informationsübertragung ist aber viel effizienter.

Es kann dann vorteilhaft werden, den Automaten vom zentralen Rechner aus durch einen entsprechenden Befehl zu "konditionieren", sodass in einem ersten Zustand der Automat patrouilliert, während er in einem zweiten Zustand nach einer vom Zentrum bestimmten Spinnstelle sucht. Der Automat kann dann entsprechende Abfragesignale aussenden, indem er beim Patrouillieren nach dem Betriebszustand der

EP 0 295 406 B1

Spinnstellen fragt, während er im Suchmodus nach der Spinnstellenidentifikation fragt.

Ueberwachung durch den Automaten

Der Automat kann aber auch so ausgeführt werden, dass er gewisse Ueberwachungsfunktionen unabhängig von den ihm übertragenen Informationen ausübt. Dazu kann er mit entsprechenden Sensoren ausgerüstet werden, welche direkt auf die Betriebszustände ausgewählter Spinnstellenelemente (z.B. Spulendurchmesser bzw. Spulenbügelzustand - siehe EU-PS No. 126373) reagieren, und zwar beim Vorbeifahren unabhängig davon, ob er von der Spinnstelle dazu aufgefordert wird oder nicht. Falls diese Ueberwachung einen "Fehler" (eine unerlaubte Kombination von Betriebszuständen) erkennen lässt, kann der Automat an der zutreffenden Spinnstelle positionieren (auch dann, wenn die Spinnstelle ihn zum Weiterlaufen auffordert) und die vorgefundenen Zustände an den zentralen Rechner über die Spinnstelle selber mitteilen. Der Automat selber funktioniert somit mindestens zum Teil als fahrbares Ueberwachungsgerät für die in der Maschine eingebauten Elemente.

Bedienungspersonal

Obwohl die Bedienung weitgehend automatisiert werden kann, müssen gewisse Operationen heutzutage noch vom Bedienungspersonal ausgeführt werden, z.B. Kannenwechsel mit dem Einführen eines neuen Luntenendes. Es kann dann vorgesehen werden, dass bei vom Bedienungspersonal ausgeführten Operationen der Signalzustand der Spinnstelle bewusst oder automatisch geändert werden muss. Der neue Signalzustand der Spinnstelle sollte dem Automaten beim nächsten Vorbeifahren anzeigen, dass die Spinnstelle bereit ist, wieder in Betrieb genommen zu werden. Die Zustandsänderung kann auch an den zentralen Rechner gemeldet werden, sodass der Automat wenn notwendig direkt an diese Spinnstelle geschickt werden kann.

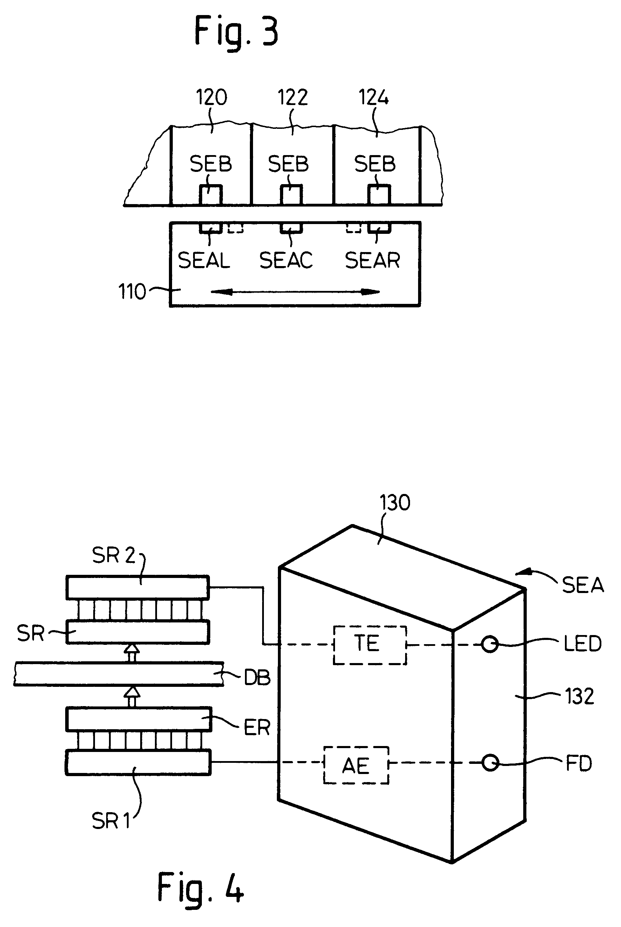

Bevorzugte Ausführungen werden nun anhand der Fig. 3 und 4 kurz erläutert. In Fig. 3 sind drei weitere Spinnstellen 120, 122, 124 (je mit einer Sender / Empfänger-Einheit SEB) schematisch angedeutet. Der Automat 110 ist gegenüber der mittleren Spinnstelle 122 zur Ausführung von Bedienungsoperationen positioniert worden. Dieser Automat ist mit drei Sender / Empfänger-Einheiten ausgerüstet, wovon die mittlere Einheit SEAC der Einheit SEB der zu bedienenden Spinnstelle 122 direkt gegenübersteht. Solange der Automat 110 stillsteht, können Informationen kontinuierlich zwischen SEAC und SEB 122 ausgetauscht werden.

Die beiden Einheiten SEAR und SEAL dienen zur Abfragung und zum Aufbau des ersten Kontaktes, wobei die Einheit SEAR während der Fahrt des Automaten 110 nach rechts (gemäss Fig. 3) und die Einheit SEAL während der Fahrt des Automaten nach links in Betrieb gesetzt wird. Der Abstand (nicht angedeutet) zwischen den beiden "Ausseneinheiten" SEAL und SEAB entspricht ungefähr der doppelten Spinnstellenteilung. In der mit voll ausgezogenen Linien dargestellten Variante steht die Einheit SEAR der Einheit SEB der Spinnstelle 124 und Einheit SEAL der Einheit SEB der Spinnstelle 120 direkt gegenüber, wenn der Automat 110 an der mittleren Spinnstelle 122 positioniert ist. Somit kann jede der beiden Spinnstellen 120, 124 abgefragt werden, bevor der Automat 110 nach Beendigung seiner Arbeit an der Spinnstelle 122 wieder wegfährt. Die Ausseneinheiten SEAL, SEAR können aber leicht nach innen versetzt werden (wie mit gestrichelten Linien angedeutet ist), sodass der Automat 110 in einer bestimmten Richtung abfahren muss, bevor er wieder eine Antwort auf ein Abfragesignal erhalten kann.

Fig. 4 zeigt weitere Einzelheiten einer (beliebigen) Sender / Empfänger-Einheit SEA des Automaten 110, zusammen mit ihr zugeordneten Schaltungselementen. Die Einheit umfasst ein Gehäuse 130 (im Perspektiv gezeichnet), welches so im Automat 110 eingebaut ist, dass eine Fläche 132 gegen die Spinnstelle gerichtet ist. In dieser Fläche 132 ist ein Lichtstrahlsender (lichtemittierende Diode) LED und ein lichtempfindliches Element (eine Fotodiode) FD montiert, sodass sie gegen entsprechende Elemente in den Einheiten SEB gerichtet sind. Die Einheit SEA enthält zudem dem Element FD zugeordnete Auswertungselektronik AE und dem Element LED zugeordnete Treiberelektronik TE. Der Ausgang der Auswertungselektronik AE ist mit einem ersten Schieberegister SR1 verbunden, sodass seriell gesendete Bits in dieses Register eingefüllt werden können. Wenn das Register voll ist, werden die darin gespeicherten Bits parallel an ein Empfänger-Register ER übergeben, wonach das Schieberegister SR1 zum Empfang von weiteren Informationen bereit ist. Die im Register ER gespeicherten Bits können von der Steuerung P (Fig. 1) gemäss ihrem eigenen Arbeitstakt über den Datenbus DB geholt und ausgewertet werden.

Eine von der Steuerung P formulierte Antwort kann wiederum über den Datenbus DB an ein Senderregister SR und von da an ein zweites Schieberegister SR2 geliefert werden. Aus diesem zweiten Schieberegister SR2 können die Datenbits seriell an die Treiberelektronik TE zur Steuerung des Sendeelements LED

9

weitergeleitet werden.

Die Sender / Empfänger-Einheit SEB kann entsprechend ausgeführt werden und mit einem ähnlichen Schaltungsaufbau zusammenarbeiten. Da aber der Automat 110 mit nur drei Einheiten SEA, die Maschine hingegen mit mehr als 200 Einheiten SEB versehen ist, sollten die Einheiten SEB relativ einfach und die Einheiten SEA relativ aufwendig konstruiert werden. Die Sender- bzw. Empfängerelemente der Einheit SEA können z.B. mit Linsensystemen versehen werden, während die entsprechenden Elemente in den Spinnstellen ohne Linsen arbeiten. Der Signalkegel SKA wird entsprechend viel enger sein als der Signalkegel SKB und kann über dem Abstand a (Fig. 2) im wesentlichen einem Zylinder entsprechen.

Weitere Varianten und Anwendungen

Die Erfindung schliesst eine direkte Verbindung zwischen dem zentralen Rechner und dem Automaten nicht aus. Wenn Informationen über einen Leiter zwischen dem Automaten und den Spinnstellen zu übertragen sind, ist es ohne weiteres möglich, den zentralen Rechner an den gleichen Leiter anzukoppeln. Sogar auch dann, wenn Informationen berührungslos zwischen dem Automaten und den Spinnstellen zu übertragen sind, kann eine Verbindung über einen Leiter (z.B. ein Schleppkabel oder eine Fahrschiene) bewerkstelligt werden, was natürlich zusätzliche Möglichkeiten für die Uebertragung von Informationen zwischen dem zentralen Rechner und dem Automaten ergibt.

Die als Beispiel dargestellte Ausführung umfasst einen zentralen Rechner CZ. Ein solcher ist aber nicht erfindungswesentlich. Die Informationen und die "Systemintelligenz" können über mehrere Zentren (Knotenstellen) verteilt werden. Wichtig ist aber, dass die einzelnen Spinnstellen in einem organisierten Gesamtinformationssystem integriert sind, sodass die zwischen dem Automaten und einer Spinnstelle ausgetauschten Informationen von der Spinnstelle in das Gesamtsystem eingespeist werden können.

Die Informationsübertragung vom Automaten über die Spinnstellen kann nur diskontinuierlich vor sich gehen, weil "Blindstrecken" zwischen benachbarten Spinnstellen zur klaren Unterscheidung dieser Spinnstellen bestehen bleiben. Weil die Spinnstellen selber dicht nebeneinander angeordnet werden, können diese Blindstrecken sehr kurz gemacht werden. Wenn aber der Automat ausserhalb eines mit Spinnstellen versehenen Bereiches fahren muss, z.B., um einen Maschinenkopf, von einer Längsseite zur anderen, gibt es eine längere Blindstrecke. Eine direkte Verbindung zwischen dem Automaten und dem Zentrum kann hier Abhilfe schaffen. Es können auch über eine längere Strecke Datenübertragungsstellen (ohne entsprechende Spinnstellen) verteilt werde. Auf jeden Fall kann die Wegfahrt des Automaten von der letzten Spinnstelle am einen Ende der Blindstrecke und die Ankunft des Automaten an der ersten Spinnstelle am anderen Ende der Blindstrecke vom zentralen Rechner überwacht werden.

Es kann eine Parkstelle für den Automaten ausserhalb des Betriebsbereiches (d.h. des mit Spinnstellen versehenen Bereiches) definiert werden, und diese Parkstelle kann ebenfalls mit einer Sender / Empfänger-Einheit zur Datenübertragung in das Gesamtsystem ausgerüstet werden.

Die Erfindung ist nicht darauf eingeschränkt, dass das Gesamtsystem innerhalb einer einzigen Maschine definiert wird. Die Betriebsstellen von mehreren Maschinen können über geeignete Datenübertragungsmittel, z.B. mit einem übergeordneten Zentralrechner, verbunden werden. Ein Automat oder mehrere Automaten können dann von diesem aus zur Bedienung aller im System integrierter Betriebsstellen gesteuert werden.

Sogar dann, wenn das Gesamtsystem in einer einzigen Maschine eingebaut ist, können mehrere Automaten gesteuert werden, und zwar nicht nur Automaten eines einzigen Typs, sondern auch Automaten verschiedener Typen. Es ist z.B. bekannt, verschiedene Operationen (z.B. Fadenansetzen, Spulenwechsel, Spinnstellenreinigung usw.) durch verschiedene Automaten durchzuführen. Wo möglich, sollten alle Automaten ihre Informationen über einen einzigen Satz von in den Spinnstellen eingebauten Sender / Empfänger-Einheiten erhalten, aber es kann im Prinzip auch für jeden Automaten-Typ ein eigener Satz von solchen Einheiten vorgesehen werden.

Die Erfindung ist nicht auf die Benutzung von optischen Mitteln als Sender / Empfänger-Einheiten zur berührungslosen Datenübertragung eingeschränkt. Es können z.B. magnetische Elemente oder Ultraschall eingesetzt werden. Im allgemeinen, um eine möglichst störungsfreie Uebertragung zu ermöglichen, sollte der Abstand (z.B. die Distanz a in Fig. 2) so kurz wie möglich gehalten werden.

Schliesslich ist die Erfindung nicht auf die Anwendung im Zusammenhang mit Textilmaschinen eingeschränkt. Die verschiedenen Betriebsstellen können zur Verarbeitung von anderen Materialien vorgesehen werden. Die Erfindung ist aber da besonders nützlich, wo die Betriebsstellen mindestens gruppenweise dicht nebeneinander liegen.

**Patentansprüche**

1. Eine Maschine oder eine Anlage mit mehreren materialverarbeitenden Stationen (108) und einem relativ zur Maschine oder zur Anlage bewegbaren Bediengerät (110) mit einer Steuerung (P) zur Durchführung von bestimmten Bedienungsoperationen des Bediengeräts (110) an den einzelnen Stationen (108), mit Mitteln zur Steuerung der Relativbewegungen zwischen den einzelnen Stationen (118) und dem Bediengerät (110), mit Mitteln (SEB, SEA) zum Austausch von Informationen zwischen dem Bediengerät (110) und den einzelnen Stationen (108), wenn das Bediengerät und eine ausgewählte Station in einer vorbestimmten örtlichen Relation zueinander stehen, dadurch gekennzeichnet, dass
   - jede Station (108) mit einer eigenen Steuerung (BP) versehen ist, um mindestens eine Funktion an der Station autonom zu steuern,
   - die Steuerung (P) des Bediengeräts (110) derart ausgelegt ist, dass mindestens eine Bedienungsoperation autonom steuerbar ist,
   - eine den Stationssteuerungen übergeordnete Steuerung (SP1 ...SPn, CZ) vorgesehen ist, um Funktionen an den Stationen (108) und Bedienungsoperationen des Bediengeräts (110) zu koordinieren und/oder zu steuern, und
   - Mittel vorgesehen sind für die Übertragung von Informationen zwischen den Stationssteuerungen (BP) und der übergeordneten Steuerung (Sp1 ... Spn, CZ).

2. Eine Maschine oder eine Anlage nach Anspruch 1, dadurch gekennzeichnet, dass das Bediengerät (110) längs der Maschine oder Anlage fahrbar ausgebildet ist.

3. Eine Maschine oder eine Anlage nach Anspruch 1 oder 2, dadurch gekennzeichnet, dass die Mittel zum Austauschen von Informationen den einzelnen Stationen (118) und dem Bediengerät (110) unmittelbar zugeordnete Sender-/Empfänger-Einheiten (SEB,SEA) sind.

4. Eine Maschine oder eine Anlage nach Anspruch 3, dadurch gekennzeichnet, dass die Sender-/Empfänger-Einheiten (SEB,SEA) derart ausgebildet sind, dass die Informationen berührungslos zwischen den einzelnen Stationen (118) und dem Bediengerät (110) austauschbar sind.

5. Eine Maschine oder eine Anlage nach Anspruch 4, dadurch gekennzeichnet, dass die Sender-/Empfänger-Einheiten (SEB,SEA) mittels elektromagnetischen Mitteln Informationen austauschen.

6. Eine Maschine oder eine Anlage nach Anspruch 5, dadurch gekennzeichnet, dass die elektromagnetischen Mittel die Informationen im optischen Bereich austauschen.

7. Eine Maschine oder eine Anlage nach einem der Ansprüche 3 bis 6, dadurch gekennzeichnet, dass die Sender-/Empfänger-Einheiten (SEB) der einzelnen Stationen (118) unmittelbar mit der jeweiligen einzelnen Steuerung (BP) der Station (118) verbunden sind und dass die Sender/ Empfänger-Einheit (SEA) des Bediengeräts (110) unmittelbar mit der Steuerung (P) des Bediengeräts verbunden ist.

8. Eine Maschine oder eine Anlage nach einem der Ansprüche 3 bis 7, dadurch gekennzeichnet, dass die Sender-/Empfänger-Einheiten (SEB) der Stationen (118) eine kegelförmige Abstrahlung aufweisen, welche eine Übertragungszone für den Austausch der Informationen definieren, wobei der Strahlwinkel ($\alpha$) derart gewählt ist, dass benachbarte Abstrahlungskegel (SKB) durch die Sender-/Empfänger-Einheit (SEA) des Bediengeräts (110) unterscheidbar sind.

9. Eine Maschine oder eine Anlage nach Anspruch 8, dadurch gekennzeichnet, dass die Übertragungsrate der Sender-/Empfänger-Einheiten (SEB,SEA) der Strahlwinkel ($\alpha$) der Abstrahlungkegel (SKB,SKA) und die Fahrgeschwindigkeit des Bediengeräts (110) derart ausgewählt sind, dass die Übertragung der auszutauschenden Informationen bei voller Fahrgeschwindigkeit des Bediengeräts (110) durchführbar ist.

10. Verfahren zur Steuerung der Funktionen einer Maschine oder einer Anlage gemäss Anspruch 1 mit mehreren materialverarbeitenden Stationen (108) und zur Steuerung der Bedienungsoperationen eines relativ zur Maschine oder zur Anlage bewegbaren Bediengeräts (110) mit einer Steuerung (P) zur Durchführung von bestimmten Bedienungsoperationen des Bediengeräts (110) an den einzelnen Stationen (108)

dadurch gekennzeichnet, dass
jede Station (108) mit einer eigenen Steuerung (BP) versehen ist, so dass bestimmte Funktionen der Stationen (108) und bestimmte Bedienungsoperationen des Bediengeräts (110) autonom von den jeweiligen Steuerungen (BP,P) gesteuert werden und dass andere Bedienungsoperationen des Bediengeräts (110) von einer den Stationssteuerungen übergeordneten Steuerung (SP1.... SPn,CZ) gesteuert werden/um Funktionen an den Stationen (108) und Bedienungsoperationen des Bediengeräts (110) zu koordinieren und/oder zu steuern.

## Claims

1.  A machine or a plant comprising a plurality of material-processing stations (108) and a servicing unit or tender (110) displaceable relative to the machine or plant with a control (P) for carrying out particular interventions by the tender (110) at the individual stations (108), with means for controlling the relative movements between the individual stations (118) and the tender (110) and means (SEB, SEA) for exchanging information between the tender (110) and the individual stations (108) when the tender and a selected station lie in a predetermined relationship to one another,
    characterised in that
    - each station (108) is provided with its own control (BP) so that it can control at least one function at the station autonomously,
    - the control (P) of the tender (110) is devised in such a manner that at least one intervention can be controlled autonomously,
    - a control (SP1 ... SPn, CZ) is provided having priority over the station controls in order to coordinate and/or control functions at the stations (108) and interventions by the tender (110), and
    - means are provided for transmitting information between the station controls (BP) and the higher priority control (SP1 ... SPn, CZ).

2.  A machine or a plant according to claim 1, characterised in that the tender (110) is designed to travel along the machine or plant.

3.  A machine or a plant according to claim 1 or 2, characterised in that the means for exchanging information are send-receive units (SEB, SEA) directly associated with the individual stations (118) and the tender (110).

4.  A machine or a plant according to claim 3, characterised in that the send-receive units (SEB, SEA) are designed in such a manner that the information can be exchanged between the individual stations (118) and the tender (110) without mechanical contact.

5.  A machine or a plant according to claim 4, characterised in that the send-receive units (SEB, SEA) exchange information by electromagnetic means.

6.  A machine or a plant according to claim 5, characterised in that the electromagnetic means exchange the information in the optical range.

7.  A machine or a plant according to one of claims 3 to 6, characterised in that the send-receive units (SEB) of the individual stations (118) are directly connected with the respective individual control (BP) of the station (118) and the send-receive unit (SEA) of the tender (110) is directly connected with the control (P) of the tender.

8.  A machine or a plant according to one of claims 3 to 7, characterised in that the send-receive units (SEB) of the stations (118) comprise a radiation cone which defines a transmission zone for the exchange of information, the radiation angle ($\alpha$) being selected such that adjacent radiation cones (SKB) can be distinguished by the send-receive unit (SEA) of the tender (110).

9.  A machine or a plant according to claim 8, characterised in that the transmission rate of the send-receive units (SEB, SEA), the radiation angle ($\alpha$), the radiation cone (SKB, SKA) and the speed of travel of the tender (110) are selected so that the transmission of the information to be exchanged can be carried out when the tender (110) is travelling at full speed.

EP 0 295 406 B1

**10.** A method for controlling the functions of a machine or a plant according to claim 1 comprising a plurality of material-processing stations (108) and for controlling the interventions of a servicing unit or tender (110) displaceable relative to the machine or plant with a control (P) for carrying out particular interventions by the tender (110) at the individual stations (108),

characterised in that each station (108) is provided with its own control (BP), so that predetermined functions of the stations (108) and predetermined interventions of the tender (110) are controlled autonomously by the respective controls (BP, P) and other interventions of the tender (110) are controlled by a control (SP1 ... SPn, CZ) having priority over the station controls in order to coordinate and/or control functions at the stations (108) and interventions by the tender (110).

**Revendications**

**1.** Une machine ou une installation avec plusieurs stations de traitement de matière (108) et un appareil de service (110) mobile par rapport à la machine ou à l'installation, avec une commande (P) utilisée pour réaliser des opérations de service déterminées de l'appareil de service (110) dans les stations individuelles (108), avec des moyens pour commander les mouvements relatifs entre les stations individuelles (108) et l'appareil de service (110), avec des moyens (SEB, SEA) pour échanger des informations entre l'appareil de service (110) et les stations individuelles (108) lorsque l'appareil de service et une station choisie se trouvent entre eux dans une relation prédéterminée de localisation, caractérisée par le fait que

- chaque station (108) est pourvue d'une propre commande (BP), afin de commander d'une manière autonome au moins une fonction à la station,
- la commande (P) de l'appareil de service (110) est étudiée de telle manière qu'au moins une opération de service est commandable d'une manière autonome,
- une commande supérieure (SP1 ...SPn, CZ) aux commandes de station est prévue afin de coordonner et/ou de commander des fonctions aux stations (108) et des opérations de service à l'appareil de service (110), et
- des moyens sont prévus pour la transmission d'informations entre les commandes de station (BP) et la commande supérieure (SP1 ... SPn, CZ).

**2.** Une machine ou une installation selon revendication 1,
caractérisée par le fait que
l'appareil de service (110) est formé pour être mobile le long de la machine ou de l'installation.

**3.** Une machine ou une installation selon revendication 1 ou 2,
caractérisée par le fait que
les moyens pour échanger des informations sont des unités émetteurs/récepteurs (SEB, SEA) immédiatement adjointes aux stations individuelles (108) et à l'appareil de service (110).

**4.** Une machine ou une installation selon revendication 3,
caractérisée par le fait que
les unités émetteurs/récepteurs (SEB, SEA) sont formées de telle manière que les informations entre les stations individuelles (108) et l'appareil de service (110) sont échangeables sans contact.

**5.** Une machine ou une installation selon revendication 4,
caractérisée par le fait que
les unités émetteurs/récepteurs (SEB, SEA) échangent des informations à l'aide de moyens électromagnétiques.

**6.** Une machine ou une installation selon revendication 5,
caractérisée par le fait que
les moyens électromagnétiques échangent les informations dans le domaine optique.

**7.** Une machine ou une installation selon l'une des revendications 3 à 6,
caractérisée par le fait que
les unités émetteurs/récepteurs (SEB) des stations individuelles (108) sont reliées immédiatement avec la commande respective individuelle (BP) de la station (108), et que l'unité émetteur/récepteur (SEA) de l'appareil de service (110) est reliée immédiatement avec la commande (P) de l'appareil de service.

13

**8.** Une machine ou une installation selon l'une des revendications 3 à 7,
caractérisée par le fait que
les unités émetteurs/récepteurs (SEB) des stations (108) possèdent une réflexion de forme conique qui définit une zone de transmission pour l'échange des informations, et où l'angle de réflexion ($\alpha$) est choisi de telle manière que des cônes de réflexion adjacents (SKB) peuvent être différenciés par l'unité émetteur/récepteur (SEA) de l'appareil de service (110).

**9.** Une machine ou une installation selon revendication 8,
caractérisée par le fait que
le taux de transmission des unités émetteurs/récepteurs (SEB, SEA), l'angle de réflexion ($\alpha$), le cône de réflexion (SKB, SKA) et la vitesse de déplacement de l'appareil de service (110) sont choisis de telle manière que la transmission des informations à échanger peut être réalisée en pleine vitesse de déplacement de l'appareil de service (110).

**10.** Méthode pour commander les fonctions d'une machine ou d'une installation selon revendication 1 avec plusieurs stations de traitement de matière (108), et pour commander les opérations de service d'un appareil de service (110) mobile par rapport à la machine ou à l'installation, avec une commande (P) utilisée pour réaliser des opérations de service déterminées de l'appareil de service (110) dans les stations individuelles (108),
caractérisée par le fait que
chaque station (108) est pourvue d'une propre commande (BP), de sorte que des fonctions déterminées des stations (108) et des opérations de service déterminées de l'appareil de service (110) sont commandées d'une manière autonome par les commandes respectives (BP, P), et que d'autres opérations de service de l'appareil de service (110) sont commandées par une commande supérieure (SP1.... Spn, CZ) aux commandes de station, afin de coordonner et/ou de commander des fonctions aux stations (108) et des opérations de service à l'appareil de service (110).

# Fig. 1

# Fig. 2

## Fig. 3

## Fig. 4